# EUROPÄISCHE PATENTSCHRIFT

(11) **EP 1 379 418 B1**
(45) Veröffentlichungstag und Bekanntmachung des Hinweises auf die Patenterteilung: **27.05.2009**
(21) Anmeldenummer: 02714027.6
(22) Anmeldetag: 16.02.2002
(51) Int. Cl.: B60W 30/16, B60W 30/08, B60W 10/06, B60W 10/10, B60W 10/18, B60T 7/12

(54) **VERFAHREN ZUR KOLLISIONSVERHINDERUNG BEI KRAFTFAHRZEUGEN**
METHOD FOR PREVENTING COLLISIONS INVOLVING MOTOR VEHICLES
PROCEDE POUR EVITER DES COLLISIONS POUR DES VEHICULES

(30) Priorität: 12.04.2001 DE 10118707
(43) Veröffentlichungstag der Anmeldung: 14.01.2004
(73) Patentinhaber: ROBERT BOSCH GMBH, 70442 Stuttgart (DE)
(72) Erfinder: MATTES, Bernhard, 74343 Sachsenheim (DE); DODEN, Berend-Wilhelm, 71638 Ludwigsburg (DE); MORITZ, Rainer, 70794 Filderstadt (DE); WAGNER, Jochen, 71696 Moeglingen (DE)
(86) Internationale Anmeldenummer: PCT/DE2002/000574
(87) Internationale Veröffentlichungsnummer: WO 2002/083470

(56) Entgegenhaltungen:
- EP-A- 0 941 903
- EP-A- 0 965 508
- EP-A- 1 070 624
- EP-A- 1 081 004
- EP-A- 1 095 833
- EP-A- 1 127 728
- EP-A- 1 184 244
- EP-A- 1 185 431
- WO-A-02/14128
- WO-A-99/20508
- DE-A- 2 642 211
- DE-A- 4 328 304
- DE-A- 19 745 128
- US-A- 5 731 977
- US-A- 6 149 251

## Beschreibung

Die Erfindung betrifft ein Verfahren zur Kollisionsverhinderung bei Kraftfahrzeugen, bei dem vor dem Fahrzeug befindliche Hindernisse mit einem fahrzeugeigenen Ortungssystem erfaßt werden, aus den Ortungsdaten eine Kollisionswahrscheinlichkeit berechnet wird und in Abhängigkeit von der Kollisionswahrscheinlichkeit eine oder mehrere abgestufte Reaktionen zur Vermeidung der Kollision ausgelöst werden.

### Stand der Technik

Das Verfahren ist insbesondere für den Einsatz in Verbindung mit einem System zur adaptiven Geschwindigkeits- und Abstandsregelung bei Kraftfahrzeugen vorgesehen, wie es in der Veröffentlichung "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26-29 Februar 1996, beschrieben wird. Das in dieser Veröffentlichung beschriebene Regelsystem, das auch als ACC-System (Adaptive Cruise Control) bezeichnet wird, basiert auf einem Abstandssensor, beispielsweise einem mehrzielfähigen Radarsensor, der an der Frontseite des Fahrzeugs angebracht ist, um Abstände und Relativ-geschwindigkeiten zu vorausfahrenden Fahrzeugen zu messen. In Abhängigkeit von den Meßdaten dieses Radarsensors wird dann die Geschwindigkeit des eigenen Fahrzeugs so geregelt, daß zu dem unmittelbar vorausfahrenden Fahrzeug ein vorbestimmter Abstand eingehalten wird, den der Fahrer in der Form einer sogenannten Sollzeitlücke bestimmen kann. Wenn sich kein vorausfahrendes Fahrzeug im Ortungsbereich des Radars befindet, erfolgt eine Regelung auf eine vom Fahrer eingestellte Wunschgeschwindigkeit.

Normalerweise greift dieses System beispielsweise über eine Drosselklappe in das Antriebssystem des Fahrzeugs ein, so daß die Fahrzeuggeschwindigkeit über das Antriebsdrehmoment des Motors geregelt wird. Wenn jedoch beispielsweise auf Gefällstrecken oder, wenn abstandsbedingt eine stärkere Verzögerung des Fahrzeugs erforderlich ist, das Schleppmoment des Motors nicht ausreicht, eine ausreichende Verzögerung des Fahrzeugs zu bewirken, so erfolgt ein Eingriff in das Bremssystem des Fahrzeugs.

In der DE 36 37 165 A1 wird ein Verfahren der eingangs genannten Art beschrieben, bei dem aus den erfaßten Ortungsdaten die relative Annährungsgeschwindigkeit des Objektes, von dem die Kollisionsgefahr ausgeht, die theoretische Zeitspanne bis zum Aufprall ohne Reaktion und die momentan erforderliche Fahrzeugverzögerung zur sicheren Verhinderung des Aufpralls berechnet werden und unter der Berücksichtigung der möglichen Bremsverzögerung des Fahrzeugs ein ausreichender Sicherheitsabstand bestimmt wird. Das Ausmaß der Unterschreitung dieses Sicherheitsabstands stellt dann ein Maß für die Kollisionswahrscheinlichkeit dar. In Abhängigkeit von der so ermittelten Kollisionswahrscheinlichkeit erfolgt dann eine Reaktion in drei Stufen. In Stufe 1 wird lediglich ein akustisches oder optisches Warnsignal für den Fahrer ausgegeben. In Stufe 2 erfolgt ein automatischer Eingriff in das Bremssystem mit zuvor berechneter Bremskraft. In Stufe 3 wird schließlich ein Bremsvorgang mit maximaler Bremskraft ausgelöst.

Bei diesen Verfahren erweist sich jedoch aufgrund der unvermeidlichen Unsicherheit bei der Abschätzung der Kollisionsgefahr insbesondere die Festlegung der Kriterien für die Auslösung der Stufe 2 als problematisch. Wird die Schwelle für die Auslösung dieser Stufe zu hoch angesetzt, so können Kollisionen nicht sicher vermieden werden. Bei einer Verringerung dieser Schwelle steigt jedoch die Wahrscheinlichkeit, daß es aufgrund einer falschen Beurteilung der Kollisionsgefahr zu unnötigen und aus der Sicht der Fahrers unmotivierten Bremsmanövern kommt, die den Komfort und das Sicherheitsgefühl der Fahrzeuginsassen beeinträchtigen, den Nachfolgeverkehr irritieren oder gar ihrerseits der Auslöser für Auffahrunfälle im Nachfolgeverkehr sind.

In der DE 43 28304 A1, das als nächtsliegender Stand der Technik angesehen wird, wird ein Verfahren entsprechend den Merkmalen des Oberbegriffs des Anspruchs 1 beschrieben.

### Aufgabe, Lösung und Vorteile der Erfindung

Aufgabe der Erfindung ist es, bei Beibehaltung einer hohen Kollisionssicherheit die Häufigkeit von unnötigen Fahrzeugverzögerungen zu reduzieren.

Diese Aufgabe wird erfindungsgemäß dadurch gelöst, daß mindestens eine der Reaktionen eine vorbereitende Maßnahme ist, die die Umsetzung eines eventuell später ausgegebenen Befehls zur Verzögerung des Fahrzeugs beschleunigt, ohne selbst eine wesentliche fahrzeugverzögernde Wirkung zu haben.

Die Erfindung beruht auf der Überlegung, daß zwischen der Ausgabe eines Befehls, der eine Verringerung der Fahrzeuggeschwindigkeit zum Ziel hat, und dem tatsächlichen Einsetzen der Fahrzeugverzögerung stets eine systembedingte Reaktionszeit vergeht. Statt nun diese Reaktionszeit durch eine entsprechend frühere Ausgabe des Befehls zu kompensieren, werden erfindungsgemäß zunächst vorbereitende Maßnahmen ergriffen, die zu einer Verkürzung dieser Reaktionszeit führen. Wenn sich dann der Verdacht der Kollisionsgefahr bestätigt und tatsächlich ein Eingriff im Sinne einer Verzögerung des Fahrzeugs erforderlich wird, so kann die gewünschte Verzögerung des Fahrzeugs unverzüglich einsetzen. Wenn sich der Verdacht hingegen nicht bestätigt, so kann die vorbereitende Maßnahme wieder rückgängig gemacht werden, ohne daß es zu einer unnötigen Fahrzeugverzögerug kommt. In diesem Fall bleiben die vorsorglich ergriffenen Maßnahmen vom Fahrer und den übrigen Fahrzeuginsassen sowie vom Nachfolgeverkehr praktisch unbemerkt.

Vorteilhafte Ausgestaltungen der Erfindung ergeben sich aus den Unteransprüchen.

Ein wesentlicher Anteil der Reaktionszeit, die zwischen der Auslösung eines Bremsbefehls und dem tatsächlichen Wirksamwerden der Fahrzeugbremse vergeht, ist auf unvermeidliche Totvolumina im Hydrauliksystem der Bremsanlage zurückzuführen. Diese Totvolumina müssen erst mit Bremsflüssigkeit gefüllt werden, bevor die Bremsbeläge mit den Bremsscheiben oder Bremstrommeln der Radbremsen in Reibberührung kommen und die Bremse wirksam wird. Die für das Befüllen der Totvolumina benötigte Zeit beträgt bei bekannten Bremsanlagen etwa 200 bis 300 ms. Bei einer Fahrgeschwindigkeit von etwa 30 m/s (108 km/h) entspricht dies einer Verlängerung des Anhalteweges um bis zu 9 m.

Bei Antriebsschlupfregelsystemen und vergleichbaren Systemen, bei denen ebenfalls unter bestimmten Bedingungen ein fahrerunabhängiger Bremseingriff erfolgt, ist es bereits bekannt, diese Totzeit dadurch zu vermeiden oder zu verkürzen, daß schon vor dem eigentlichen Bremseingriff ein Befehl zum Vorbefüllen oder "Vorspannen" der Bremsanlage erzeugt wird (DE 196 15 294 A1).

In einer bevorzugten Ausführungsform der Erfindung wird nun ein solcher Befehl zum Vorspannen der Bremsansanlage in Abhängigkeit von der errechneten Kollisionswahrscheinlichkeit erzeugt. Auf diese Weise wird das Fahrzeug bei mittlerer Kollisionsgefahr in einen Zustand erhöhter Bremsbereitschaft versetzt, so daß, wenn sich die Kollisionsgefahr bestätigt und ein Bremseingriff erforderlich wird, die Bremswirkung wesentlich rascher einsetzt.

Unter "Vorspannen" des Bremssystems soll hier allgemein eine Maßnahme verstanden werden, die das Bremssystem in einen Zustand versetzt, in dem es schneller auf einen Bremsbefehl reagieren kann, ohne daß bereits eine wesentliche Bremswirkung eintritt. Dieses Vorspannen kann beispielsweise dadurch geschehen, daß in den Radbremszylindern und/oder in den Komponenten des Hydrauliksystems, die diesen unmittelbar vorgelagert sind, schon ein gewisser Bremsdruckaufbau erfolgt, so daß sich die Bremsbacken bereits an die Bremsscheibe oder -trommel der Radbremse annähern oder diese gar schon berühren, ohne daß jedoch schon eine nennenswerte Reibungskraft ausgeübt wird. Alternativ oder zusätzlich kann das Vorspannen auch dadurch bewirkt werden, daß in einem Druckakkumulator oder in einem Bremskraftverstärker ein gewisser Vordruck bereitgestellt wird, der bei tatsächlicher Betätigung der Bremse ein schnelleres Auffüllen des Totvolumens ermöglicht.

Bei Fahrzeugen mit ACC-System, bei denen auch ein Eingriff in die Bremsanlage vorgesehen ist, muß generell eine Umschaltung vorgenommen werden zwischen Motorbetrieb, bei dem die positive oder negative Beschleunigung des Fahrzeugs allein durch das Antriebsdrehmoment bzw. Schleppmoment des Motors erzeugt wird, und Bremsbetrieb, bei dem die Fahrzeugverzögerung durch Aktivieren der Bremse bewirkt wird. Um ein "flackerndes" Umschalten zwischen Motorbetrieb und Bremsbetrieb zu vermeiden, ist es hier zweckmäßig, die Umschaltung in Abhängigkeit von einem Beschleunigungsanforderungssignal mit einer gewissen Hysterese vorzunehmen. Die Umschaltung von Motorbetrieb auf Bremsbetrieb erfolgt dann, wenn das Beschleunigungsanforderungssignal einen niedrigen Schwellenwert unterschreitet, während das Zurückschalten auf Motorbetrieb erfolgt, wenn das Beschleunigungsanforderungssignal wieder einen höheren Schwellenwert überschreitet, der der mit dem Schleppmoment des Motors erzeugbaren Fahrzeugverzögerung entspricht. Diese an sich erwünschte Hysteresecharakteristik hat allerdings zur Folge, daß der Bremseingriff erst mit einer gewissen Verspätung erfolgt, nämlich erst dann, wenn das Beschleunigungsanforderungssignal den niedrigeren Schwellenwert erreicht. Eine "vorbereitende Maßnahme" im Sinne der Erfindung kann deshalb auch darin bestehen, daß bei mittlerer Kollisionsgefahr das Hystereseintervall verkleinert und vorzugsweise ganz auf null zurückgeführt wird, so daß der Bremsbefehl unverzüglich erzeugt wird, wenn das Schleppmoment des Motors nicht mehr ausreicht, die notwendige Fahrzeugverzögerung zu bewirken.

Bei Fahrzeugen mit Automatikgetriebe besteht eine denkbare vorbereitende Maßnahme weiterhin darin, daß bei mittlerer Kollisionsgefahr automatisch - ohne unmittlebare Änderung der Sollbeschleunigung - auf eine niedrigere Getriebestufe zurückgeschaltet wird, so daß schon im Motorbetrieb ein größeres Schleppmoment des Motors für die Fahrzeugverzögerung zur Verfügung steht. Diese Maßnahme hat zugleich den Vorteil, daß auf eine vorübergehende Störung im Verkehrsfluß in vielen Fällen ohne Bremseingriff reagiert werden kann, so daß der Nachfolgeverkehr nicht durch ein Bremslichtflackern irritiert wird, und daß nach Beseitigung der Störung schneller wieder auf die Wunschgeschwindigkeit beschleunigt werden kann.

All diese Maßnahmen können miteinander kombiniert und bei demselben Schwellenwert oder wahlweise auch bei unterschiedlichen Schwellenwerten der Kollisionswahrscheinlichkeit ausgelöst werden.

### Zeichnung

Im folgenden wird ein Ausführungsbeispiel der Erfindung anhand der Zeichnung näher erläutert.

Es zeigen:
- Figur 1: ein Blockdiagramm eines ACC-Systems eines Kraftfahrzeugs, das für die Durchführung des erfindungsgemäßen Verfahrens ausgebildet ist;
- Figur 2: ein Zeitdiagramm von Signalen, die in dem ACC- System nach Figur 1 auftreten; und.
- Figur 3: ein Zeitdiagramm entsprechend Figur 2 für den Fall, daß durch eine erhöhte Bremsbereitschaft auf eine erkannte Kollisionsgefahr reagiert wird.

### Beschreibung eines Ausführungsbeispiels

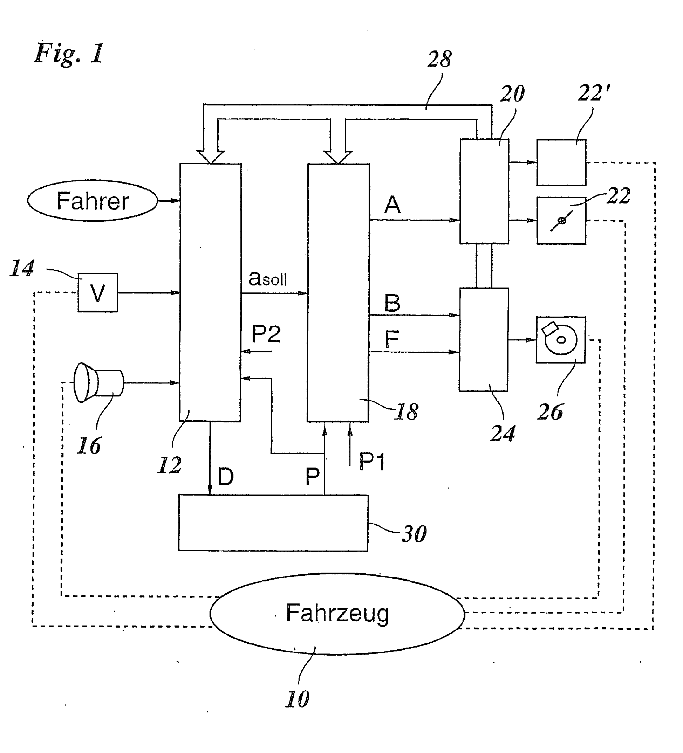

In Figur 1 ist symbolisch ein Kraftfahrzeug 10 gezeigt, dessen Geschwindigkeit mit Hilfe eines ACC-Systems geregelt wird. Ein Regler 12 erhält von einem Geschwindigkeitssensor 14 ein Signal, das die Istgeschwindigkeit des Fahrzeugs angibt. Weiterhin ist vorn am Fahrzeug ein Ortungsgerät, im gezeigten Beispiel ein Radarsensor 16 angebaut, der Abstands- und Relativgeschwindigkeitsdaten von georteten, vor dem Fahrzeug befindlichen Objekten an den Regler 12 meldet. Vorzugsweise hat der Radarsensor 16 ein gewisses Winkelauflösungsvermögen, so daß auch die Azimutwinkel der georteten Objekte erfaßt und an den Regler 12 gemeldet werden können. Auf diese Weise ist es dem Radarsystem und/oder dem Regler 12 möglich, vorausfahrende Fahrzeuge auf der eigenen Fahrspur von Fahrzeugen auf anderen Fahrspuren sowie von Standzielen am Fahrbahnrand zu unterscheiden. Wenn sich vorausfahrende Fahrzeuge auf der eigenen Fahrspur befinden, so wird das unmittelbar vorausfahrende Fahrzeug als Zielobjekt ausgewählt, und die Geschwindigkeit des Kraftfahrzeugs 10 wird so geregelt, daß ein bestimmter Sollabstand zu dem vorausfahrenden Fahrzeug eingehalten wird. Dieser Sollabstand ist vom Fahrer wählbar durch Eingabe einer Sollzeitlücke, die den zeitlichen Abstand angibt, in dem das vorausfahrende Fahrzeug und das eigene Fahrzeug denselben Punkt auf der Fahrbahn passieren. Der Sollabstand wird somit dynamisch an die jeweilige Fahrgeschwindigkeit angepaßt.

Wenn die Fahrbahn vor dem eigenen Fahrzeug frei ist, so erfolgt, falls der Fahrer einen entsprechenden Befehl gegeben hat, eine Regelung auf eine vom Fahrer gewählte Wunschgeschwindigkeit.

Darüber hinaus wertet der Regler 12 auch Bedienungsbefehle sowie Fahrbefehle des Fahrers aus, insbesondere den Grad der Betätigung des Gaspedals und ggf. des Bremspedals. Der Fahrer hat somit jederzeit die Möglichkeit, aktiv in das Geschehen einzugreifen, um in kritischen Fahrsituationen angemessen zu reagieren.

Im Regler 12 sind somit verschiedene Regelungs- und Steuerungsstrategien implementiert, und je nach Fahrsituation oder Befehlen des Fahrers werden ein oder mehrere Regelstrategien ausgewählt, und ihre Ergebnisse werden, wie im Stand der Technik bekannt ist, in geeigneter Weise zu einem Beschleunigungsanforderungssignal aₛₒₗₗ verknüpft, das die augenblickliche Sollbeschleunigung des Fahrzeugs angibt.

Eine Entscheidungseinheit 18 entscheidet anhand des Beschleunigungsanforderungssignals aₛₒₗₗ, ob ein Eingriff in das Antriebssystem oder in das Bremssystem des Fahrzeugs erforderlich ist. Bei positiven Werten des Beschleunigungsanforderungssignals erfolgt ein Eingriff in das Antriebssystem. In diesem Fall wird ein Stellbefehl A an ein elektronisches Motorsteuersystem 20 ausgegeben, das über verschiedene Aktoren, hier symbolisiert durch eine Drosselklappe 22, auf den Motor und ggf. das Getriebe 22' des Kraftfahrzeugs 10 einwirkt. Allgemein können die Funktionen des Motorsteuersystems 20 die Steuerung der Drosselklappe 22, die Steuerung des Kraftstoff-Einspritzsystems, der Zündung und anderer Komponenten des Antriebssystems des Fahrzeugs umfassen. Im Fall eines Fahrzeugs mit Automatikgetriebe kann dazu auch die Wahl der Getriebestufe gehören. Anhand des Stellbefehls A und der aktuellen Betriebsparameter des Motors steuert das Motorsteuersystem 20 den Motor so an, daß ein dem Beschleunigungsanforderungssignal entsprechendes Antriebsdrehmoment des Motors erzeugt wird.

Wenn das Beschleunigungsanforderungssignal aₛₒₗₗ negative Werte annimmt, so wird zunächst durch das Motorsteuersystem 20 der Motor gedrosselt, so daß das Schleppmoment des Motors zur Verzögerung des Fahrzeugs ausgenutzt wird. Wenn jedoch die Entscheidungseinheit 18 feststellt, daß die so erzielbare Fahrzeugverzögerung nicht ausreicht, die Istbeschleunigung des Fahrzeugs mit der durch aₛₒₗₗ repräsentierten Sollbeschleunigung in Übereinstimmung zu halten, so wird durch die Entscheidungseinheit 18 auf Bremsbetrieb umgeschaltet. In diesem Fall bleibt der Motor gedrosselt, und die Entscheidungseinheit 18 liefert einen Stellbefehl B an ein Brems-Steuersystem 24 des Fahrzeugs. Das Brems-Steuersystem 24 steuert über die hydraulische Bremsanlage des Fahrzeugs die Funktion der an den einzelnen Rädern angeordneten Bremsen 26 und erfüllt beispielsweise die Funktion eines Antiblockiersystems, eines Antriebsschlupfregelsystems und/oder eines ESP-Systems zur dynamischen Stabilisierung des Fahrzeugs.

Die hydraulische Bremsanlage des Fahrzeugs ist aus Gründen der Ausfallsicherheit direkt mit dem Bremspedal des Fahrzeugs gekoppelt und enthält mindestens einen Druckerzeuger oder Booster, der die vom Fahrer über das Bremspedal ausgeübte Bremskraft verstärkt. Im Rahmen der Antriebsschlupfregelung oder des ESP-Systems ist der Druckerzeuger auch in der Lage, unabhängig von der Betätigung des Bremspedals einen Bremsdruck aufzubauen und die Bremsen 26 zu betätigen. Ebenso löst auch der von der Entscheidungseinheit 18 übermittelte Stellbefehl B eine Betätigung der Bremse mit fester oder variabler Bremskraft aus.

Wenn bei unbetätigter Fahrzeugbremse und drucklosen Radbremszylindern der Stellbefehl B ausgegeben wird, so müssen zunächst die unvermeidlich in der hydraulischen Bremsanlage und insbesondere in den Radbremszylindern vorhandenen Totvolumina mit Bremsflüssigkeit aufgefüllt werden, bevor es tatsächlich zu einem Reibschluß zwischen den Bremsbacken und den Bremstrommeln oder Bremsscheiben kommt und die Bremse wirksam wird. Um die für das Auffüllen dieser Totvolumina benötigte Zeit zu verkürzen, weist das Brems-Steuersystem 24 eine Funktion auf, die es gestattet, eine Vorbefüllung der Bremsanlage zu veranlassen. Bei diesem Vorgang, der hier als "Vorspannen" bezeichnet werden soll, wird die Bremsanlage so weit unter Druck gesetzt, daß die Totvolumina aufgefüllt werden und die Bremsbeläge dicht an die Bremsscheiben oder Bremstrommeln heranrücken oder diese sogar schon leicht berühren. Im letzteren Fall wird ein geringfügiger Verschleiß an der Bremse in Kauf genommen.

Diese Vorspannfunktion kann nicht nur innerhalb des Brems-Steuersystems 24 ausgelöst werden, sondern sie kann auch extern durch ein entsprechendes Füllsignal ausgelöst werden, das in der Form eines Flags F von der Entscheidungseinheit 18 ausgegeben wird. Je nach Zustand der Bremsanlage bewirkt somit das Setzen des Flags F, daß von der Brems-Steuereinheit 24 ein Vorbefüllen der Bremsanlage ausgelöst wird. Wird das Flag F wieder zurückgesetzt, so wird dieser Vorbefüllvorgang von der Brems-Steuereinheit 24 rückgängig gemacht, sofern nicht inzwischen eine tatsächliche Aktivierung der Bremse durch den Stellbefehl B erfolgt ist.

Die Parameter, die den Zustand des Motors und der Bremsanlage des Fahrzeugs kennzeichnen, sind in dem Antriebssteuersystem 20 bzw. dem Brems-Steuersystem 24 verfügbar und können über einen Datenbus 28 (CAN-Bus) an andere Systemkomponenten des Fahrzeugs übermittelt werden, so daß sie im Bedarfsfall auch für eine Auswertung im Regler 12 und in der Entscheidungseinheit 18 zur Verfügung stehen.

Die durch den Eingriff in das Antriebssystem oder das Bremssystem des Fahrzeugs verursachten Änderungen der Fahrzeugbeschleunigung führen zu entsprechenden Änderungen der Fahrzeuggeschwindigkeit und des Abstands zum vorausfahrenden Fahrzeug und werden über den Geschwindigkeitssensor 14 und den Radarsensor 16 zurückgekoppelt.

Ein Kollisionswächter 30 erhält vom Regler 12 innerhalb jedes Regelzyklusses von beispielsweise 1 ms einen Satz von Daten D, die eine Abschätzung der Kollisionswahrscheinlichkeit ermöglichen. Beispielsweise umfassen diese Daten für jedes vom Radarsensor 16 erfaßte Objekt den Abstand des eigenen Fahrzeugs zu diesem Objekt, die Relativgeschwindigkeit zwischen Objekt und eigenem Fahrzeug, den Azimutwinkel des Objekts relativ zur Geradeaus-Richtung des eigenen Fahrzeugs und/oder den daraus berechneten Querversatz des Objekts relativ zum Fahrzeug sowie die vom Geschwindigkeitssensor 14 gemessene Fahrzeuggeschwindigkeit und den von einem nicht gezeigten Lenkwinkelsensor gemessenen Lenkeinschlag des eigenen Fahrzeugs. Aus diesen Daten errechnet der Kollisionswächter 30 zunächst für jedes erfaßte Objekt eine Kollisionswahrscheinlichkeit, die um so größer ist, je kleiner der Abstand des Objekts ist, je größer der Betrag der (negativen) Relativgeschwindigkeit ist und je kleiner' der Querversatz des Objektes ist. Aus den so erhaltenen Kollisionswahrscheinlichkeiten für die einzelnen Objekte wird beispielsweise durch Maximumauswahl eine Kollisionswahrscheinlichkeit P gebildet, die an die Entscheidungseinheit 18 und an den Regler 12 übermittelt wird.

Die Entscheidungseinheit 18 und der Regler 12 vergleichen die Kollisionswahrscheinlichkeit P mit mehreren voreingestellten Schwellenwerten P1, P2, bei deren Überschreitung jeweils eine bestimmte Reaktion ausgelöst wird. Im hier betrachteten Beispiel soll angenommen werden, daß bei Überschreitung eines ersten Schwellenwertes P1, der einer mittleren Kollisionswahrscheinlichkeit entspricht, das Flag F gesetzt wird, um das Fahrzeug in einen Zustand erhöhter Bremsbereitschaft zu versetzen. Die Überschreitung des höheren zweiten Schwellenwertes P2 bedeutet akute Kollisionsgefahr und führt zur Auslösung eines Bremsvorgangs.

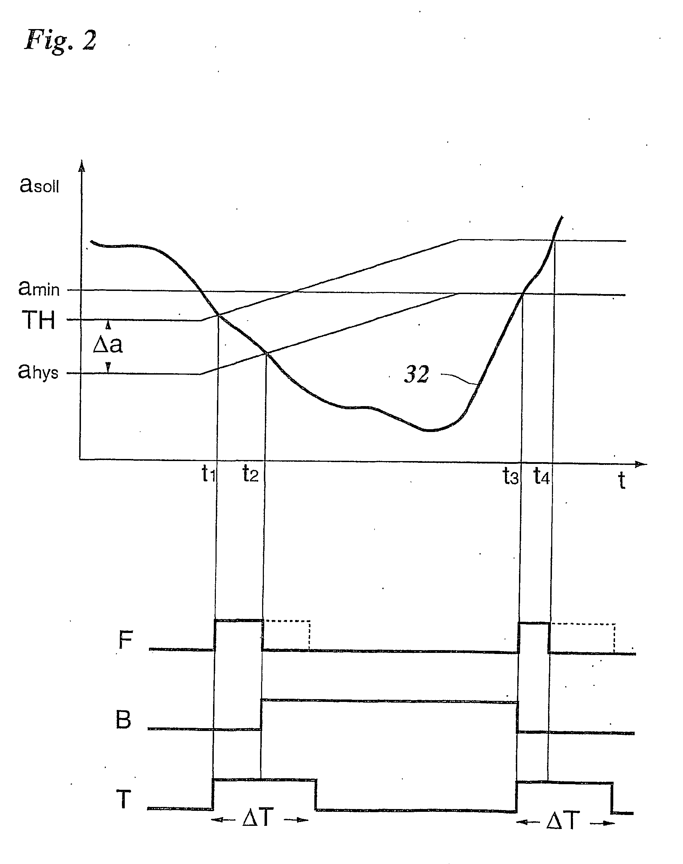

Unter Bezugnahme auf Figur 2 soll nun zunächst die Funktionsweise des in Figur 1 gezeigten Regelsystems ohne Berücksichtigung der Funktion des Kollisionswächters 30 erläutert werden.

In Figur 2 zeigt die Kurve 32 im oberen Teil des Diagramms ein Beispiel für den zeitlichen Verlauf des Beschleunigungssignals aₛₒₗₗ, das vom Regler 12 ausgegeben wird. Ein Beschleunigungswert aₘᵢₙ repräsentiert die kleinstmögliche (negative) Beschleunigung, die unter den aktuellen Betriebsbedingungen mit dem Schleppmoment des Motors erzeugbar ist. Die Ausgabe des Stellbefehls B und damit die Umschaltung auf Bremsbetrieb erfolgt jedoch erst, wenn aₛₒₗₗ zur Zeit t₂ einen etwas kleineren Wert a_{hys} unterschreitet. Das Zurückschalten auf Motorbetrieb erfolgt dagegen zu dem Zeitpunkt t₃, an dem das Beschleunigungsanforderungssignal aₛₒₗₗ wieder größer wird als amin. Durch diese Hysteresefunktion wird vermieden, daß die Entscheidungseinheit 18 "flackernd" zwischen Bremsbetrieb und Motorbetrieb umschaltet. Das Hystereseintervall aₘᵢₙ-a_{hys} ist jedoch nicht statisch, sondern wird dynamisch variiert. Von dem Augenblick an, an dem das Beschleunigungsanforderungssignal aₛₒₗₗ den Wert amin unterschreitet, wird das Hystereseintervall mit konstanter Änderungsrate auf 0 verringert, so daß a_{hys} sich dem Wert amin annähert. So wird erreicht, daß zwar eine kurzzeitige Unterschreitung von aₘᵢₙ toleriert wird, doch wenn diese Unterschreitung länger anhält, kommt es durch die Anhebung der Auslöseschwelle a_{hys} doch zu einer Umschaltung auf Bremsbetrieb (im gezeigten Beispiel zur Zeit t₂).

In Figur 2 ist weiterhin ein Schwellenwert TH angegeben, der um einen festen Betrag Δa größer ist als a_{hys}. Wenn aₛₒₗₗ zur Zeit t₁ diesen Schwellenwert TH unterschreitet, so wird das Flag F gesetzt und damit das Vorbefüllen der Bremsanlage eingeleitet. Die Zeit τ, die für die Vorbefüllung der Bremsanlage benötigt wird, beträgt je nach Bauart etwa 200 bis 300 ms. Der Regler 12 ist so ausgebildet, daß die zeitliche Änderungsrate des Beschleunigungssignals aₛₒₗₗ nach unten beschränkt ist, z.B. gilt: d/dt(aₛₒₗₗ) > - 1,0 m/s³. Damit die Vorbefüllung der Bremsanlage in der Zeitspanne zwischen t₁ und t₂ abgeschlossen werden kann, muß deshalb gelten: Δa > |τ * d/dt(aₛₒₗₗ)|. Im hier angenommenen Beispiel wäre deshalb Δa = 0,35 m/s² ein geeigneter Wert, um den der Schwellenwert TH über der Auslöseschwelle a_{hys} liegen sollte.

Wenn das Beschleunigungsanforderungssignal aₛₒₗₗ unter die Auslöseschwelle a_{hys} sinkt und die Bremse tatsächlich ausgelöst wird, so wird das Flag F wieder zurückgesetzt. Falls aₛₒₗₗ die Auslöseschwelle a_{hys} nicht erreicht, wird das Flag F spätestens nach Ablauf einer vorgegebenen Zeitspanne ΔT zurückgesetzt, die durch das Signal T eines Zeitgebers bestimmt wird. Der Zeitgeber wird gestartet, wenn aₛₒₗₗ den Schwellenwert TH erreicht (bei t₁), und das Signal T fällt dann nach Ablauf der vorgegebenen Zeitspanne ΔT wieder ab. Mit der abfallenden Flanke wird auch das Flag F wieder zurückgesetzt, falls es dann noch aktiv ist. Dieser Fall ist in Figur 2 bei dem Signalverlauf des Flags F gestrichelt eingezeichnet.

Im gezeigten Beispiel steigt das Beschleunigungsanforderungssignal aₛₒₗₗ zur Zeit t₃ wieder über amin an, und zu diesem Zeitpunkt schaltet die Entscheidungseinheit 18 wieder auf Motorbetrieb um, so daß der an das Brems-Steuersystem 24 ausgegebene Stellbefehl B wieder abfällt. Zu diesem Zeitpunkt wird das Flag F erneut gesetzt. Falls das Beschleunigungsanforderungssignal wieder unter aₘᵢₙ sinkt, ohne zwischendurch den Schwellenwert TH zu erreichen, kann somit die Bremse wieder ohne Verzögerung aktiviert werden. Erst wenn das Beschleunigungsanforderungssignal aₛₒₗₗ wieder über den (nun erhöhten) Schwellenwert TH angestiegen ist (zur Zeit t₄) oder wenn erneut die Zeitspanne ΔT abgelaufen ist, wird das Flag F wieder zurückgesetzt, und der vorgespannte Zustand der Bremsanlage wird aufgehoben.

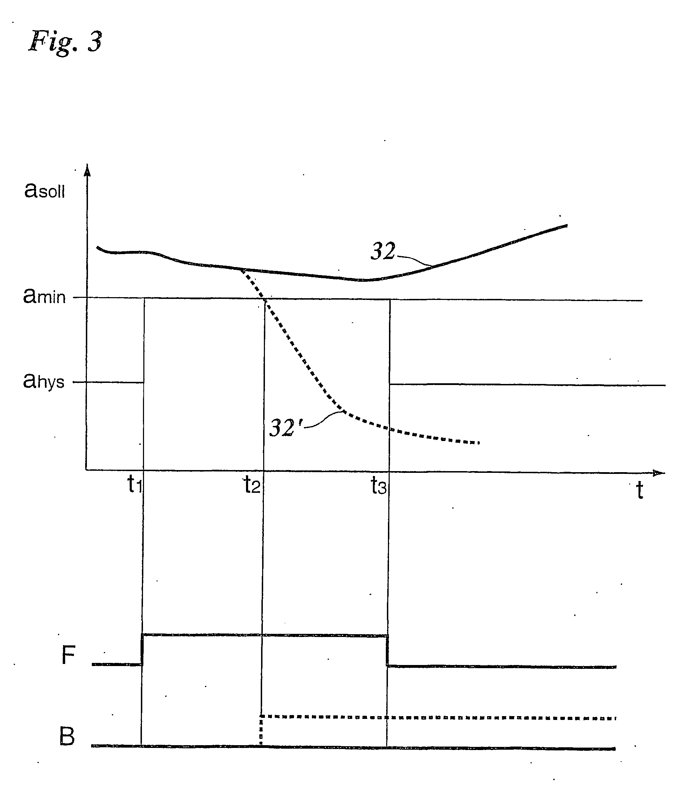

In Figur 3 ist der Fall illustriert, daß die vom Kollisionswächter 30 gelieferte Kollisionswahrscheinlichkeit P zu einem Zeitpunkt t₁ den ersten Schwellenwert P1 überschreitet. Beispielsweise kann dieser Anstieg der Kollisionswahrscheinlichkeit P dadurch verursacht sein, daß ein auf der Nachbarspur fahrendes langsameres Fahrzeug nicht mehr seine Spur hält und sich bedenklich der eigenen Fahrspur annährt. Da dies noch nicht dazu führt, daß dieses auf der Nachbarspur fahrende Fahrzeug als Zielobjekt für die Abstandsregelung ausgewählt wird, bleibt das Beschleunigungsanforderungssignal aₛₒₗₗ hiervon zunächst unbeeinflußt. Dieses Signal bleibt deshalb oberhalb des Wertes aₘᵢₙ, wie durch die in durchgezogenen Linien eingezeichnete Kurve 32 in Figur 3 illustriert wird. Dennoch wird das Flag F gesetzt, wenn die Kollisionsgefahr P zum Zeitpunkt t₁ den Schwellenwert überschreitet. Anders als bei dem in Figur 2 betrachteten Fall bleibt das Flag F hier ohne zeitliche Beschränkung bestehen, bis die Kollisionsgefahr P zum Zeitpunkt t₃ wieder unter den Schwellenwert P1 absinkt, beispielsweise weil das auf der Nebenspur fahrende Fahrzeug wieder auf die Mitte dieser Spur zurückgekehrt ist.

Weiterhin wird in der Zeitspanne zwischen t₁ und t₃ die Auslöseschwelle für den Stellbefehl B von aₕᵥₛ auf aₘᵢₙ erhöht, so daß bei der Umschaltung zwischen Motorbetrieb und Bremsbetrieb keine Hysterese mehr stattfindet. Da das Beschleunigungsanforderungssignal aₛₒₗₗ jedoch oberhalb von amin bleibt, hat auch dies keinen Einfluß auf die Fahrzeuggeschwindigkeit. Allenfalls könnte es durch das Vorspannen der Bremsanlage, die durch das Flag F veranlaßt wurde, zu einem geringfügigen Schleifen der Bremsbeläge an den Bremstrommeln oder Bremsscheiben kommen. Der dadurch verursachte Verzögerungseffekt ist jedoch vernachlässigbar. Insgesamt verharrt somit das Fahrzeug in der Zeitspanne zwischen t₁ und t₃ in einem Zustand, in dem noch keine wirkliche Verzögerung des Fahrzeugs stattfindet, sondern nur die Bremsbereitschaft erhöht ist. Falls das auf der Nebenspur fahrende Fahrzeug nicht auf die Mitte dieser Nebenspur zurückkehrt, sondern tatsächlich auf die eigene Spur wechselt, so wird es vom Regler 12 als Zielobjekt ausgewählt, und es erfolgt nunmehr eine Abstandsregelung auf dieses Fahrzeug. Dies führt zu einer deutlichen Abnahme des Beschleunigungsanforderungssignals aₛₒₗₗ entsprechend der gestrichelt eingezeichneten Kurve 32' in Figur 3.

Falls es durch den Spurwechsel des vorausfahrenden Fahrzeugs zu einer akuten Gefahrensituation kommt, so überschreitet die Kollisionswahrscheinlichkeit P auch den höheren Schwellenwert P2. Der Regler 12 reagiert auf diese Situation damit, daß die Beschränkung der Änderungsrate des Beschleunigungsanforderungssignals ausgesetzt wird. Das Beschleunigungsanforderungssignal aₛₒₗₗ kann deshalb sehr rasch abnehmen, mit einer Änderungsrate, die dem Betrage nach größer ist als die Schranke von 1 m/s³. Aufgrund dieses Umstands und aufgrund der Anhebung der Auslöseschwelle von aₕᵥₛ auf amin wird schon nach sehr kurzer Zeit, zum Zeitpunkt t₂, der Stellbefehl B zum Aktivieren der Bremse ausgegeben. Da die Bremsanlage schon vorab zum Zeitpunkt t₁ vorgespannt wurde, wird die Bremse unverzüglich wirksam, so daß die Kollision abgewendet werden kann.

Bei noch höherer Kollisionswahrscheinlichkeit kann ein Befehl zur Betätigung der Bremse mit maximaler Bremskraft auch direkt von der Entscheidungseinheit 18 erzeugt werden, ohne Rücksicht auf das vom Regler gelieferte Beschleunigungsanforderungssignal. Auch in diesem Fall führt das vorbereitende Setzen des Flags F zu einer unverzüglichen Ausführung des Bremsbefehls. Ebenso wirkt sich das automatische Vorspannen der Bremsanlage auch positiv aus, wenn der Fahrer selbst die akute Kollisionsgefahr bemerkt und das Bremspedal betätigt.

## Patentansprüche

1. Verfahren zur Kollisionsverhinderung bei Kraftfahrzeugen (10), bei dem vor dem Fahrzeug befindliche Hindernisse mit einem fahrzeugeigenen Ortungssystem (16) erfaßt werden, aus den Ortungsdaten (D) eine Kollisionswahrscheinlichkeit (P) berechnet wird und in Abhängigkeit von der Kollisionswahrscheinlichkeit (P) eine oder mehrere abgestufte Reaktionen zur Vermeidung der Kollision ausgelöst werden und daß mindestens eine der Reaktionen eine vorbereitende Maßnahme ist, die die Umsetzung eines eventuell später ausgegebenen Befehls (B) zur Verzögerung des Fahrzeugs beschleunigt, ohne selbst eine wesentliche fahrzeugverzögernde Wirkung zu haben, **dadurch gekennzeichnet daß** bei nicht vorhandener oder geringer Kollisionswahrscheinlichkeit im Rahmen einer Geschwindigkeitsregelfunktion mit einer Hysteresecharakteristik zwischen Eingriff in das Antriebssystem (20, 22) und Eingriff in das Bremssystem (24, 26) des Fahrzeugs umgeschaltet wird und daß eine der vorbereitenden Maßnahmen bei zunehmender Kollisionswahrscheinlichkeit eine Verringerung des Hystereseintervalls ist.

2. Verfahren nach Anspruch 1, **dadurch gekennzeichnet, daß** eine der vorbereitenden Maßnahmen die Ausgabe eines Befehls (F) zum Vorspannen der Bremsanlage (24, 26) des Fahrzeugs ist.

3. Verfahren nach Anspruch 1 oder 2, für Kraftfahrzeuge (10) mit Automatikgetriebe, **dadurch gekennzeichnet, daß** eine der vorbereitenden Maßnahmen ein Getriebeeingriff zur Herabsetzung der Getriebestufe ist.

## Claims

1. Method for preventing collisions involving motor vehicles (10), in the case of which obstacles located in front of the vehicle are detected with the aid of a vehicle's dedicated locating system (16), a collision probability (P) is calculated from the location data (D), and one or more stepped reactions for avoiding the collision are triggered as a function of the collision probability (P), and at least one of the reactions is a preparatory measure which speeds up the implementation of a command (B), possibly output later, to decelerate the vehicle without itself having a substantial effect in decelerating the vehicle, **characterized in that,** in the event of there being no or a low collision probability, a switchover is made between intervention in the drive system (20, 22) and intervention in the brake system (24, 26) of the vehicle within the scope of a speed control function with a hysteresis characteristic, and **in that** given an increasing collision probability one of the preparatory measures is a reduction in the hysteresis interval.

2. Method according to Claim 1, **characterized in that** one of the preparatory measures is to output a command (F) to preload the brake system (24, 26) of the vehicle.

3. Method according to Claim 1 or 2 for motor vehicles (10) with automatic transmission, **characterized in that** one of the preparatory measures is the engagement of the transmission in order to reduce the transmission stage.

## Revendications

1. Procédé pour empêcher les collisions de véhicules automobiles (10), dans lequel
des obstacles situés en avant du véhicule sont détectés à l'aide d'un système (16) de localisation propre au véhicule,
une probabilité de collision (P) est calculée à partir des données de localisation (D) et pour éviter la collision, une ou plusieurs réactions échelonnées sont déclenchées en fonction de la probabilité de collision (P),
au moins l'une des réactions est une disposition préparatoire qui accélère la conversion d'un ordre (B) de ralentissement du véhicule émis éventuellement plus tard, sans avoir intrinsèquement un effet essentiel de ralentissement du véhicule,
**caractérisé en ce que**
au cas où la probabilité de collision est nulle ou faible, dans le cadre d'une fonction de régulation de vitesse, on commute entre une action sur le système d'entraînement (20, 22) et une action sur le système de freinage (24, 26) du véhicule et
**en ce que** l'une des dispositions préparatoires est une diminution de l'intervalle d'hystérésis lorsque la probabilité de collision augmente.

2. Procédé selon la revendication 1, **caractérisé en ce que** l'une des dispositions préparatoires est l'émission d'un ordre (F) de présollicitation de l'installation de freinage (24, 26) du véhicule.

3. Procédé selon les revendications 1 ou 2, destiné à des véhicules automobiles (10) à transmission automatique, **caractérisé en ce que** l'une des dispositions préparatoires est une action sur la transmission qui amène à passer au rapport de transmission inférieur.
